# EUROPEAN PATENT SPECIFICATION

(11) **EP 2 579 608 B1**
(45) Date of publication and mention of the grant of the patent: **19.06.2019**
(21) Application number: 11184376.9
(22) Date of filing: 07.10.2011
(51) Int. Cl.: H04N 21/436, H04N 21/441, H04N 21/458, H04N 21/475

(54) **Conflict processing accessing a personal TV functionality by a plurality of users**
Konfliktverarbeitung beim Zugang auf eine persönliche Fernsehfunktionalität seitens mehrerer Benutzer
Accès de traitement de conflit d'une fonctionnalité de télévision personnelle par plusieurs utilisateurs

(43) Date of publication of application: 10.04.2013
(73) Proprietor: Nokia Solutions and Networks Oy, 02610 Espoo (FI)
(72) Inventor: Baumgarten, Hans-Georg, 81667 München (DE)
(74) Representative: Nokia EPO representatives

(56) References cited:
- WO-A1-2007/113543
- US-A1- 2006 041 655
- US-A1- 2010 122 293
- US-B1- 6 363 434

## Description

The invention relates to a method and to a device for conflict processing when accessing a personal TV functionality by a plurality of users.

In the publication US 2006/041655 A1 a system is disclosed for controlling a host using a remote control whose functions are defined by that host. The controlled devices can be devices for controlling applications within a home or within a commercial building.

IPTV users are used to consume TV services simply by switching on their shared, home network-connected TV device, which typically is an IPTV set-top box. This is convenient for consuming nearly all TV services. In infrequent cases of specific TV service transactions, e.g., "service package or movie purchasing" or "access to parental control blocked content", the user has to enter a secret 4 digit PIN.

The market of personalized TV services is emerging, driven by the need to ease the access to the diversity of managed and other kinds of retrievable content. Personal content recommendations and personal structuring of content access according to personal interest and experience is highly desired.

In order to provide personalized TV services, e.g., providing live TV recommendations with regard to about 300 Digital TV channels to watch or providing a filtered recording archive showing only personally owned recordings, the TV system has to be able to identify the user.

Users expect simple and convenient TV device interactions. Hence, requesting the user to handle frequent and complex logons may decrease the acceptance level towards personal TV services beyond a critical level and thus endangers the whole business case.

Known IPTV solutions support dedicated levels of end-user authorization. Only the managed TV device (e.g., set-top box) is authenticated for being operated by a registered subscriber.

In order to purchase content or service packages and/or to override parental control, a dedicated personal identity number (PIN, typically 4 digits) has to be entered via an infrared remote control.

The **problem** to be solved is to overcome the disadvantages stated above and in particular to provide a flexible, efficient and convenient mechanism for a single user for interacting with an IPTV system.

This problem is solved according to the features of the independent claims. Further embodiments result from the depending claims.

In order to overcome this problem, a method for conflict processing when accessing a personal TV functionality by a plurality of users is provided, comprising the following steps:
- the personal TV functionality is activated via a control device;
- resources are determined;
- a resource conflict is determined;
- the resource conflict is processed according to at least one predetermined criterion.

The personal TV functionality can be activated by a user of a user group, wherein the user group corresponds to said plurality of users. Such activation may comprise an identification of the user, e.g., by entering an ID or by selecting an input means that is associated with his ID. Such input means can be an icon displayed on a TV screen and/or on the control device. It is noted that the activation can be achieved in an automated manner without any input being made by the user.

For example, the control device may activate the personal TV functionality when entering a home, approaching a TV device or the like. If the control device comprises a personalized tag (e.g., an RFID tag that allows identification of the user) or is a mobile phone associated with the user, or if the TV device supports end user face, voice, fingerprint and/or gesture recognition, such automated activation can be conducted in an efficient and seamless way requiring only limited interaction overhead from the user himself.

The resource conflict can be based on several users trying to obtain access to their personal TV functionality at the same time, in particular by requesting the same resources. Due to resource limitation (e.g., only one movie may preferably be watched at a time on a big TV screen), the conflict is processed (in particular solved) by applying rules that are based on said (at least one) criterion.

This solution presented herein addresses user management and conflict resolution aspects of personal media and information services provided to a trusted user group that may be managed by a service provider. Advantageously, a high degree of user convenience can be reached when using the personal TV functionality in the manner described. "TV" in this regard may in particular refer to any managed personalized media and information (service), supporting but not requiring peer-to-peer secure communication support. The TV service is provided to a trusted user group via shared TV devices, for example driven by various different kinds of (remote) control devices.

Hence, the solution presented reduces the number of user authentication and authorization interactions via different types of remote control devices when using personal TV service resources.

The solution in particular supports management of TV viewers (users), shared TV devices, (personal) TV remote control, remote control specific TV user authentication and authorization mechanisms and efficiently handles potential multi-user TV usage conflicts.

It is in particular an option to utilize user identification capabilities provided by a shared TV server.

In an embodiment, the control device is assigned to the user group or to a user of the user group.

Hence, the control device can be configured for a particular user (of the group) or for the group.

In another embodiment, the personal TV functionality is activated by an input provided via the control device and the resources are determined based on this input.

As an alternative, the personal TV functionality is activated in an automated way without an input provided via the control device.

In a further embodiment, a TV profile is determined for the user of the user group.

The TV profile can be managed by a TV system, in particular a TV set-top box (TV server).

In a next embodiment, the resources comprise at least one of the following:
- a TV screen;
- a video recording resource, in particular a client video recorder resource;
- a processing capability;
- a bandwidth;
- a channel;
- rights for media delivery and/or blended content delivery;
- a TV service.

It is also an embodiment that at least one of the following resource conflicts is determined due to different users:
- a current resource conflict;
- a potential future resource conflict.

Pursuant to another embodiment, the predetermined criterion for processing the conflict comprises at least one of the following:
- a priority of the user;
- a priority of the control device;
- an order and/or a sequence of previous access to the personal TV functionality;
- a source activating access to the personal TV functionality;
- a type of access to the personal TV functionality;
- a distance to a TV device, in particular a shared TV device.

Hence, the conflict can be processed by granting access to the user and/or the control device (in case of competing control devices) to whom the highest priority (class) has been assigned.

For example, access may be granted to a device with the most recent interactive logon (last successful access to the personal TV functionality). User-initiated logons can be higher prioritized than machine-initiated logons.

It is also an option that a resource is locked by the control device. In such case, the resource may only be unlocked after the session has ended (e.g., a TV program is over, the user has logged off) or by a higher prioritized allocation of this resource according to which the previously allocated resource is freed. This may be done only after confirmation that the higher prioritized user really wants to cancel the existing session of lower priority.

It is an option that by locking a session (resource allocated), the locking user or control device is assigned a lower priority.

It can be differentiated whether the session was locked by a user or by a machine; hence, an automated lock could be unlocked by a user or device with a higher priority.

A logon conducted by a device that is in a vicinity of the shared TV device may have a higher priority than a logon initiated by a device of unknown distance to the shared TV device.

According to an embodiment, the resource conflict is processed according to at least one predetermined criterion by issuing a lease for the resource that is subject to the conflict.

For example, a "lease for TV control" can be issued. Hence, explicit interactive resource de-allocation by TV users may become an optional feature thereby reducing the number of mandatory user interface interactions. Furthermore, it enforces the robustness of the overall signaling approach against remote control originated request communication errors. Reserved TV resources may be freed automatically, even in case the reserving remote control becomes disconnected. Advantageously, no central heartbeat based signaling is required.

A "session lease" grant has an impact on other TV users and related resource reservation may be limited to the duration of the session. This approach limits the maximum time of an exclusive usage of TV resources enforced by a single TV user. In particular, other users become aware for how long the resource will be allocated and thus not available.

According to another embodiment, the lease may be a short-term lease of a predefined duration that can be extended on demand prior to its time lapse.

The supported short-term lease for TV control (e.g., 30 seconds) enables short-term reservation and releasing of exclusive TV resources during a single TV service activity, like, e.g., a personal VoD catalog featuring personal VoD catalog priorities on the shared TV screen. This approach thus allows sharing of TV resources.

The conflict resolution approach supports extending the time line of an initially granted short-term lease via a follow-up TV service request, which is issued during the duration of the initial lease.

In yet another embodiment, a non-availability of the resource is indicated to at least one user of the user group.

For example, the user who has requested resources can be informed via the shared TV screen and/or the control device that the resource is currently not available. In addition, a reason, why the resource is unavailable, an identification of the user to whom the resource has been allocated and/or a predicted time for the resource to be available can be indicated.

According to a next embodiment, the control device comprises at least one of the following devices:
- a remote control;
- a mobile device, in particular a smart phone or a computer for accessing the personal TV;
- a wireless tag, in particular an RFID tag;
- a control device comprising a face, voice, fingerprint and/or gesture recognition functionality;
- a device providing a biometrical user identification and/or gesture recognition capability;
- a device interworking with a shared TV server providing a biometrical user identification and/or a gesture recognition capability.

The control device can use various communication links to access the personal TV functionality, e.g., wireless or wired communication links, in particular: WiFi, Bluetooth, cellular communication, infrared or other transmission technologies.

Pursuant to yet an embodiment, the personal TV functionality comprises at least two stages,
- a personal TV mode and
- a safe personal TV mode,
wherein a transition from the personal TV mode to the safe personal TV mode is conducted upon receiving an authorization.

Hence, requirements to enter the personalized TV mode can be separated from entering the safe personal TV mode. This enables a convenient user experience, because the safe personal TV mode may require a higher level of trust, e.g., entering a PIN, whereas it is used not so often compared to the personal TV mode, which requires less trust (and only an end user identification, and no authentication at all).

According to an embodiment,
- the transition to the safe personal TV mode is triggered by the remote device,
- the authorization is requested by presenting an input dialog,
- the input dialog is closed after the authorization (has been conducted successfully) or after a predetermined period of time.

Hence, the user interface of the TV system (e.g., the set-top box) may present a temporary dialogue box, allowing the user to enter his PIN. After a few seconds the dialogue box may close automatically. This enables an efficient and convenient interaction with the TV system minimizing the efforts and buttons to be pushed by the user.

Pursuant to a further embodiment, the personal TV mode is entered upon receiving an identification.

Hence, a user identification can be provided to enter the personal TV mode, e.g. by end users providing a face, gesture and/or voice command or fingerprint and/or gesture that is recognized by a detection system, activating a TV user interface icon or entering at least one identification number or character or by activating a predefined button via the control device.

As an alternative, the identification can be transmitted (and received) by approaching the TV system. The user may carry a device (computer, mobile phone, RFID tag, etc.) to convey the identification to the TV system thereby allowing the TV system to enter (or trying to enter) the personal TV mode.

Entering the personal TV mode is also referred to as logon.

According to a next embodiment, a status information is displayed indicating the personal TV mode and/or the safe personal TV mode in particular together with an information regarding a user that is currently in any such mode.

As per another embodiment, a transition from a default TV mode to the safe personal TV mode is conducted upon receiving an authorization.

The default TV mode may be a state reached by a shared TV device, e.g., a set-top box, after start-up. The default TV mode does not require a logon to be conducted by a particular (real) user. In fact, the default TV mode may be used for basic IPTV services provided by the shared TV device without any user-specific TV profile being applied. The default TV mode may be reached when a user logs off from his personal TV mode or from his safe personal TV mode.

It is also an embodiment that the authorization and/or the identification is provided by the control device with or without user interaction.

The control device may be a personalized and managed remote control device (PRC) as described herein. The control device may comprise user identification and/or authorization information to enter the personal TV mode and/or the safe personal TV mode. This is even possible without the user having to enter the authorization every time he wants to access the safe personal TV mode.

The control device, in particular the PRC, can typically be registered to be used by a single TV viewer. In a sense, the TV viewer owns this PRC. It is noted that in case the PRC is a smart phone, the user normally enters a PIN to access the functions of the smart phone; in this regard, this PRC is already an individualized device and thus substantially different from the commonly available infrared remote control that can be used by anyone who gets hold of it.

The PRC may be a device with a trust module or any secure place for storing the privacy PIN. In such scenario, the privacy PIN does not have to be entered by the user (at all).

Hence, advantageously, the PRC allows personalized and automated logons with the TV system with a minimum of user interaction.

The problem stated above is also solved by a device for conflict processing when accessing a personal TV functionality by a plurality of users, comprising or being associated with a processing unit that is arranged
- for activating the personal TV functionality via a control device;
- for determining resources;
- for determining a resource conflict;
- for processing the resource conflict according to at least one predetermined criterion.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

According to an embodiment, said device is a shared TV device, in particular a TV server or a TV set-top box.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a communication system comprising at least one device as described herein.

Embodiments of the invention are shown and illustrated in the following figures:
- Fig.1: shows a schematic diagram comprising components enabling a personal TV functionality for a plurality of users;
- Fig.2: shows an exemplary diagram visualizing a sequence of transitions between TV service execution modes (also referred to as TV service execution levels) providing the basis for applying a quick logon capability;
- Fig.3: shows available transitions between different modes (TV service session execution states), also referred to as states;
- Fig.4: shows examples of user or device-specific logon priority classes;
- Fig.5: shows a state diagram with transitions visualizing TV session control transfer pursuant to logons conducted by TV users associated with different priority classes;
- Fig.6: shows an exemplary diagram visualizing a conflict resolution between competing allocations for a primary TV screen.

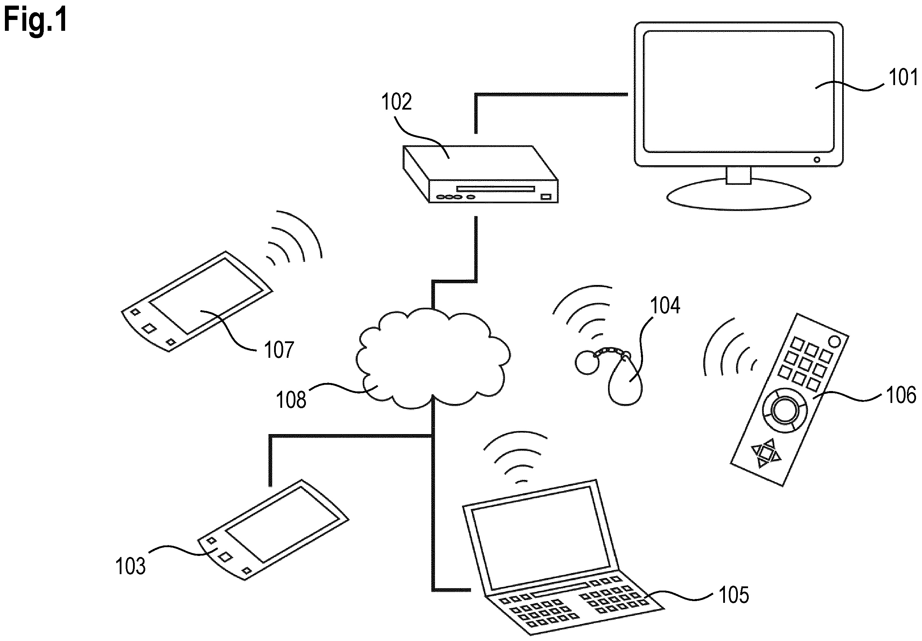

**Fig.1** shows a schematic diagram comprising components enabling a personal TV functionality for a plurality of users.

A shared TV screen 101 is connected via a shared set-top box 102 (also acting as TV server providing interactive user interface control means) to an access network 108. Several wireless or wired control devices 103, 105 and 107 provide a user identification functionality together with a remote control functionality and can be used to access the shared set-top box 102. Also, a unique identifier emitter 104 can be provided for a user. In addition, a shared remote TV control device 106 can be used to access the shared set-top box 102, e.g. via an infrared interface.

The components can in particular be summarized as follows:

### Shared TV screen 101:

This TV screen can be viewed by multiple TV users, often at the same time. Displaying TV services at the shared TV screen can be a shared but exclusive resource. Although remote TV control devices may also be equipped with TV screens, the shared TV screen may be of big size and is preferably deployed at a place that supports a convenient viewing experience, e.g., in a home's living room. The shared TV screen is also referred to as "primary screen".

### Shared set-top box (also referred to as (shared) TV server) 102:

It can be regarded as a TV service execution platform generating the TV signal forwarded to the shared TV screen 101. The TV service execution platform can receive signals from multiple types of TV control devices, user identification and unique identification emitting devices. The TV remote control devices may connect to the shared TV server 102 via different types of access networks and wireless media. The shared TV server 102 may have access to TV service execution profiles and media and service assets owned by connected TV users. The shared TV server could be equipped with interactive user interface (UI) elements (e.g., buttons, sliders or switches) enabling TV service control. These UI elements can be shared among the TV users. The TV server 102 provides shared but limited TV service resources which get reserved upon request from (remote) control devices.

### Shared remote TV control 106:

This can be a wireless remote TV control device, which may be used by multiple members of the TV subscriber's household for interactive control of TV service execution.

### User identification & remote TV control device 103, 105, 107:

This type of device can be statically associated with a particular user, e.g., a single TV household member. Such binding can be (semi-)permanent and registered within the device as well as with the TV server 102. The control device can be protected against misuse by other persons (e.g., by authentication means).

### Unique identifier emitter 106:

This emitter can be realized as an RFID tag, emitting a user's identification (also referred to as identifier) via a (short-range) wireless connection. The TV server 102 is able to map this identification to a TV user.

### TV user:

The TV user can be associated with a unique identifier. Per TV service, a user specific TV profile can be managed by the shared TV server 102 and/or the TV control devices 103, 105, 106, 107. Upon user identification, the TV profile can be used for TV service execution purposes.

Accessing personal TV resources by several members of a TV user group may lead to conflicts, which can be processed and in particular resolved by considering at least one of the following steps:
(1) A TV user being a member of a TV user group is mapped to at least one TV control device or a shared TV server user identification functionality (e.g. voice, face, fingerprint and/or gesture recognition capabilities). Hence the TV control device itself or used in combination with the shared TV server end user identification becomes a personal TV control device for this particular user. The TV solution provides related TV user and TV control device registration and configuration capabilities.
   As an option, the registered and configured personal TV control device authenticates the associated user communicating with a shared TV device.
(2) The TV system (comprising, e.g., the shared TV server) manages at least one TV service profile (also referred to as TV profile) associated with a single member of the TV user group.
(3) Upon execution of a TV service request, originating from a connected personal TV control device, the TV service profile of the TV control device associated TV user is applied. Hence, TV service execution becomes personalized.
(4) When serving a personal TV control device request, the associated and required personal TV service resources for the matching TV user profile capabilities and requirements are requested and/or reserved.
(4a) TV service resource reservation either originates from a user's personal TV control device interaction or occurs implicitly, due to a TV service request logic run by the personal TV control device.
(4b) A duration of the TV service resource being reserved may vary due to the invoked personal TV service and/or the (personal) TV profile applied.
   Typical personal TV resources are:
   - a shared TV client personal video recorder,
   - a shared primary screen,
   - a processing capability (e.g., processing power required to execute a service requested),
   - a shared TV input bandwidth, enabling multiple media content to be processed, in particular transmitted,
   - a shared TV output bandwidth, enabling multiple media session to be transmitted towards other connected media devices within the home network or any other network or destination,
   - media usage rights shared within the group of TV household members,
   - shared usage rights for blended communication, Internet media access, (extended) EPG content or other value-added services.
   Example: In order to browse a convenient personalized video-on-demand (VoD) movie catalog and purchase the movie by using a primary screen via a connected and interactive personal TV control device, the personal resources to be managed can be (i) a user interface of the primary screen and (ii) a processing power required (or requested). Hence, such resources may be reserved in an implicit manner for a given period of time, e.g., for 30 seconds, to be used for such interactive personal VoD catalog browsing purposes. After an initial browsing is conducted, resource reservation may be extended for another 30 seconds enabling, e.g., finalizing, the VoD movie purchase transaction.
   Further Example: In order not to get disturbed during a live soccer game broadcast via digital TV, the TV user may be able to lock the primary screen for his personal use via his personal TV control device. The primary screen device UI and related resources will be reserved and locked until the end of the football game.
(5) Upon request by another TV user's personal TV control device, potentially conflicting personal resource reservation requests for shared TV service resources can be identified.
(6) Personal TV service resources can be granted to a selected TV user. When prohibiting personal TV service execution for competing TV users, which were not able to successfully reserve the required resource, the TV system may inform those users about the unavailability of the requested or required TV resources.
   Unavailability messages may contain information about the type of a missing TV service resource and its state of reservation. Also, a name of the TV user (or an identify information) using (owning) the resource reservation and a predicted (e.g., extrapolated) point in time of the resource's re-availability can be displayed to users that did not succeed in allocating the necessary resource.
   In case of prioritized TV users, information due to TV service resource pre-emption and yielded TV service pre-emption on behalf of a higher priority TV user can be provided. Higher prioritized users are typically prompted for acknowledging the need for TV service pre-emption of lower prioritized TV users.

### Specific personal TV usage examples

A personal TV activation by a personal TV control device that is connected via a mobile network can be achieved according to the following example: A child of a TV household wants to watch an adventure movie, which he is not allowed to because of parental control settings. He calls his mother on the phone, who is currently away running errands, asking her to launch this specific movie. The mother checks the movie's preview via her remotely connected device (e.g., mobile phone, computer, etc.) and agrees to the child's request. She then starts the movie to be displayed on the living room's primary screen by applying her personal profile for remotely launching the movie.

### Personal TV Logon details

A quick logon can be applicable in case a shared TV device supports multiple levels of user rights for TV session execution. A shared TV device paradigm assumes that multiple TV users may concurrently request TV services, e.g., watch movies.

After the TV device has been started (end of booting) a basic execution functionality (level) is available to any user having access to the shared TV device. The TV device has been authenticated for being owned by a valid TV service subscriber and operates in a default non-privileged TV usage mode (also referred to as default TV mode). All information created in this mode is shared with all other TV users of the TV subscriber's household; this can be regarded as the common mode of TV usage. The assumption is that this basic non-privileged execution mode is still the most common shared TV device use case. Hence, without any explicit logon from any user, shared TV services can be consumed by the audience.

Several TV viewers can be associated with a TV service subscriber. A TV viewer may use multiple TV devices and hence can be associated with multiple TV device user accounts. All TV viewers may be allowed accessing basic subscribed TV services. Personalization of a TV services depends on TV viewer specific TV service interactions and on applying TV viewer specific service usage profiles (TV profiles).

After the quick logon is conducted by a TV viewer, the shared TV device provides TV services personalized for this TV viewer who is logged on (i.e. successfully conducted a logon). With a successful logon, the TV viewer enters the personal TV service execution mode (also referred to as personal TV mode). This is in particular of advantage in case personalized shared TV device execution modes are increasingly popular, because of the need to easily navigate in the diversity of available TV content.

In addition, a safe shared TV device execution mode (also referred to as safe personal TV mode) enables hiding information from other users and supports the consumption of private content in an exclusive and safe way. As an assumption, this safe mode might occur less frequently compared to the other two modes personal TV mode and default TV mode.

Hereinafter, those three levels of TV service execution form a TV service execution and access rights hierarchy are summarized:
Default TV mode:
   Sharing of newly created information (recordings, bookmarks, comments, etc.) with the TV users. No access to personal profiles or filters.
Personal TV mode:
   Newly created information (recordings, bookmarks, comments, etc.) is not shared with other TV users, but other users may be able to discover logon credentials. Newly created information can be marked as "hidden", becoming visible only in safe personal TV mode. Access to personal profile and filters is possible.
Safe personal TV mode:
   Newly created information (recordings, bookmarks, comments, etc.) is not shared with other TV users. Hidden information is visible. Access to personal profile and filters is possible.

Hence, requirements of viewer logon for personalized TV usage can be separated from logon requirements enabling a safe personal TV session.

In addition to the TV session related execution rights, TV systems may also support dedicated transaction execution modes enabling secure TV transaction. User authentication enabling secure TV transaction execution can be considered being independent from TV usage session logon. It is typically implemented by entering a 4-digit PIN upon request of the TV system.

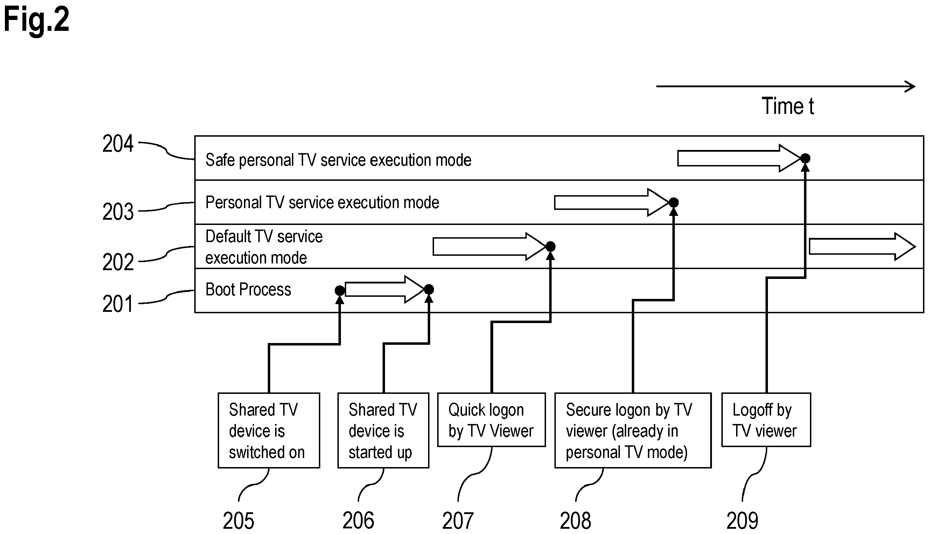

**Fig.2** shows an exemplary diagram visualizing a sequence of transitions between TV service execution modes (also referred to as TV service execution levels) providing the basis for applying a quick logon capability.

Fig.2 visualizes (in view of a time t) a boot process 201, a default TV (service execution) mode 202, a personal TV (service execution) mode 203 and a safe personal TV (service execution) mode 204. The "service execution" portion may be omitted for readability purposes.

In a step 205, a shared TV device (e.g., a set-top box) is switched on and it starts up (booting) in a step 206. After the booting is over, the shared TV device enters the default TV mode 202. In this default TV mode, a quick logon can be initiated by a TV viewer according to step 207 thereby entering his personal TV mode 203. The TV viewer may then conduct a secure logon according to a step 208 thereby entering his safe personal TV mode 204. In a step 208, the TV viewer logs off from his safe personal TV mode 204 and the device reenters the default TV mode 202.

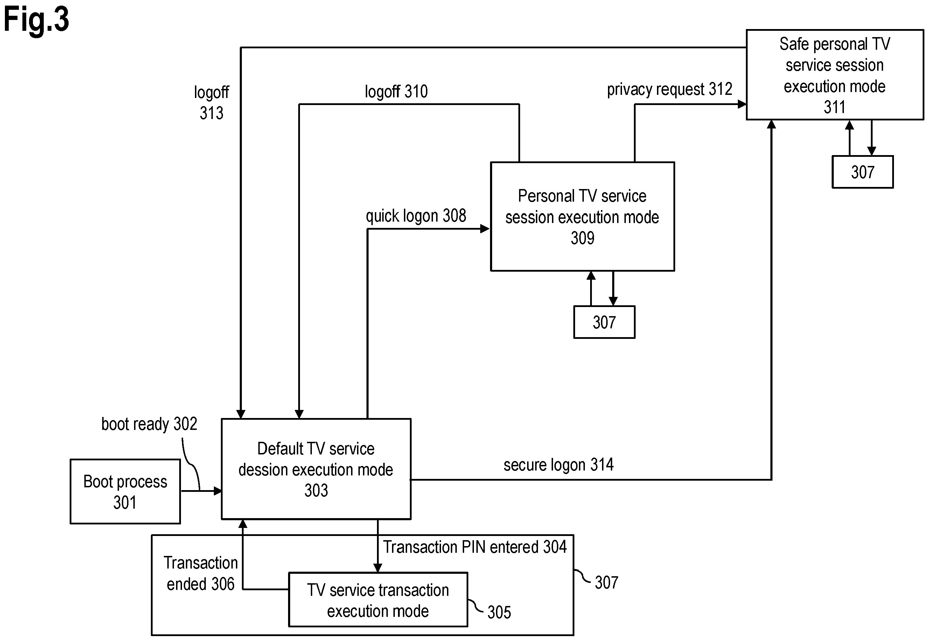

**Fig.3** shows available transitions between different modes (TV service session execution states), also referred to as states.

After a boot process 301 is over (see transition boot ready 302), a default TV (service session execution) mode 303 is reached. If a transaction PIN is entered according to a transition 304, a TV service transaction execution mode 305 is reached. If the transaction has ended, the state 303 is reached again according to a transition 306. The combination of transition 304, state 305 and transition 306 can be summarized as a block 307 and applied to other states (see below). Via a quick logon 308, a transition from the state 303 to a personal TV (service session execution) mode 309 is achieved. Via a logoff 310, a state change from the state 309 to the state 303 is conducted.

From the state 309 a safe personal TV (service session execution) mode 311 can be reached via a privacy request 312. Accordingly, a logoff 313 triggers a state transition from the state 311 to the state 303.

Also, the state 311 can be reached directly from the state 303 via a secure logon transition 314.

The combination of state 305 and according transitions 304, 306, summarized by the box 307, apply for the state 309 as well as for the state 311.

It is noted that the state 303 is also referred to as default TV mode, the state 309 is also referred to as personal TV mode and the state 311 is also referred to as safe personal TV mode.

### Quick logon via (infrared) TV remote control

The quick logon 308 can be conducted by a typical infrared TV remote control (RC) or any other (short-range) wireless remote control device that may or may not have a display of its own:
- The quick logon initiated by the user can be summarized as follows:
   ▪ After pressing a <logon> button on the RC, the user enters a first (and optionally second) <digit> RC button corresponding to a user identification (ID). It is noted that the <digit> button may be a button with any digit; it is also possible to produce this digit by pressing several buttons on the RC.
   ▪ As an alternative, the user may use existing RC buttons, e.g., for TV menu navigation for selecting a "logon" option before entering the user ID by pressing a first (and optionally second) <digit> button on the RC.
- The quick logon that is initiated by the TV device client can be summarized as follows (in case the user logon is mandatory for providing a TV service):
   ▪ By pressing a first (and optionally second) <digit> RC button, the user enters his ID.
- The TV user interface may indicate the ID of the user by presenting an image or icon that could be pre-configured and associated with the user, preferably presented in an overlay manner.
- The logoff 310 can be supported by logging on a pre-configured virtual default user. The TV subscriber's user management associates a default non-privileged TV usage mode with a "virtual user" ID and log-off credential, e.g., a user "0". After logoff, the TV system operates in the default TV mode.
   ▪ Alternatively a dedicated <Log Off> RC button or TV menu item could be provided.
   ▪ After having logged off, no user who is logged on is indicated.

The quick logon credential formats supported can be configured by the TV service provider or by the TV subscriber. They can be part of the TV subscriber's profile. The user interface described above may handle the RC as a shared device accessible to many users.

Depending on the TV services' requirements the quick logon status may last when switching to another TV service. In general, the scope of the quick logon can be configured by a given TV service context.

A 4-digit PIN can be used to increase the trust level of a TV user when executing secured TV transactions. However, such PIN may not correspond to a logon activity of the user.

Advantageously, the TV user interface may indicate via an overlay icon a current trust level of the user who is logged on, preferably for the duration of the trusted service.

### Secure logon via (infrared) TV remote control

The transition from the default TV mode 303 to the safe personal TV mode 311 can be achieved via the secure logon 314, enabling the secured and private usage of TV services supported.

Such secure logon 314 can be conducted by using a typical infrared TV remote control (RC) or any other (e.g., short range) wireless remote control device that may or may not have a display of its own:
- The secure logon initiated by the user may comprise the following steps:
   ▪ After pressing a <Logon> button on the RC, the user enters a first (and optionally second) <digit> RC button corresponding to a user identification (ID).
   ▪ As an alternative, the user may use existing RC buttons, e.g., for TV menu navigation for selecting a logon option before entering the user ID by pressing a first (and optionally second) <digit> RC button.
   Then, the user (immediately) enters at least one additional digit, e.g., a 3rd, 4th, 5th and optionally 6th <digit> RC button, corresponding to a PIN (also referred to as privacy security PIN).
- The TV device client initiated secure logon can be conducted as follows (in case the logon of the user is mandatory for providing a TV service): The user may enter a first (and optionally second) <digit> RC button for entering the user id part, (immediately) followed by the user's privacy security PIN.
- The TV user interface may indicate the privacy level of the user by presenting an image or icon that could be pre-configured and associated with the user, preferably presented in an overlay manner. The image or icon may be shown for the duration of the user's private session.
- The logoff 313 from the safe personal TV mode 311 corresponds to the logoff 310 described with regard to the quick logon functionality; after the user has logged off, the TV system may operate in the default (non-privileged) TV mode 303.

The secure logon credentials supported can be configured by the TV service provider or by the TV subscriber. They may be part of the TV subscriber's profile.

It is noted that the number of digits required as ID and/or privacy security PIN may be subject to configuration.

As an option, different digit-entering schemes via, e.g., a remote device (for example, said RC) can be applied. For example, the remote device may have numerical keys, each representing at least one <digit> to be entered. Also, selection keys can be used for entering digits, e.g., by pressing a button several times thus selecting one out of a pre-configured set of digits.

### Privacy request authentication via (infrared) TV remote control

The transition from the personal TV mode 309 to the safe personal TV mode 311 can be achieved via the privacy request 312, enabling the secured and private usage of TV services. The privacy request 312 may be realized as an authentication dialogue.

Such privacy request 312 can be conducted by using a typical infrared TV remote control (RC) or any other (e.g., short range) wireless remote control device that may or may not have a display of its own:
- The privacy request initiated by the user may comprise the same steps as described with regard to the secure logon 314.
- The TV device client initiated privacy request authentication can be conducted as follows (in case a user authentication is mandatory for providing a private TV service):
   The user may enter a first (and optionally second) <digit> RC button for entering the user id part, (immediately) followed by the user's PIN.
- The TV user interface may indicate the privacy level of the user by presenting an image or icon that could be pre-configured and associated with the user, preferably presented in an overlay manner. The image or icon may be shown for the duration of the user's private session.
- The logoff 313 from the safe personal TV mode 311 corresponds to the logoff 310 described with regard to the quick logon functionality; after the user has logged off, the TV system may operate in the default (non-privileged) TV mode 303.

The user identification and the (privacy security) PIN are credentials that can be used for the privacy request 312 as well as for the secure logon 314.

The TV user may use the PIN only for himself and not share it with other TV users. Hence, the remote control can be shared as a common (unsecure) device between several TV users and also provide access to the safer personal TV mode of each user.

Different TV services like watching digital live TV or VoD catalogue browsing may have different requirements and capabilities for TV service personalization and privacy.

Depending on TV service requirements the quick logon, secure logon or privacy status of a TV session may change, e.g., be terminated (automatic logoff), when switching between TV services (e.g., by switching from watching digital live TV to VoD catalogue browsing). Requirements related to a TV session status, a scope or triggering of logoffs may be subject to configuration in the TV service context.

The quick logon 308, the secure logon 314 and the privacy request 312 reduce the requirements of TV remote control hardware by allowing TV subscriber profile-based parsing based on information (e.g., digits) entered on the remote control.

Given an average household comprising 3 to 4 TV users, a remote control comprising a <Logon> button and a user initiated scenario, the quick logon can be conducted by pressing two buttons on the remote control, a secure logon as well as a privacy request can be conducted by pressing four buttons on the remote control.

### Alternative logon mechanism utilizing pre-configured user associated icons or images

- User initiated quick logon:
   In case of an already running TV service (at least in the default non-privileged mode not requiring any explicit user logon), the user may initiate a quick logon requesting a set of pre-configured TV user associated icons by pressing a <Logon> button on the remote control. After that, the user may select the pre-configured icon or image representing him via screen navigation. Then, the TV service personalization can commence, the TV user's icon may appear on the shared TV device screen and/or on a display of the RC.

- TV device client offers a quick logon option:
   The set of pre-programmed TV user associated icons are displayed on the UI of the TV services providing personalization features. The user personalizes and logs on to the given service by activating his icon. In this scenario, a TV service is already running at least in the default non-privileged TV mode, which may not require a separate logon procedure.
- After the quick logon is conducted, the user interface of the TV service may indicate a user associated icon or image, e.g., in an overlay manner. The icon or image may show the user who is actually logged on to the personalized TV mode 309.
- Depending on the TV service's requirement, the quick logon status may last even when switching to another TV service. The scope of the quick logon may be flexibly set up for a given TV service context.

The supported quick logon credentials (also icons supported) can be configured by the TV service provider or by the TV subscriber. They may be part of the TV subscriber's profile.
- The logoff can be conducted by activating a corresponding icon (which may also be or comprise text). The user management of the TV subscriber may associate the default non-privileged TV mode 303 with the logoff icon. After the logoff has been conducted, the TV system operates in the default TV mode 303. In this mode, no indication of a user that is logged on needs to be displayed.

The secure logon 314 enables the secured usage of TV services by entering the safe personal TV mode 311 and starts from the default TV mode 303. The secure logon 314 can be initiated via a programmable untrusted infrared TV remote control (or any (short range wireless remote) control device) having, e.g., a touchscreen:
- User initiated secure logon:
   A TV service may be running in the default TV mode 303 not requiring any explicit user logon. The user can now initiate a secure logon 314 requesting a set of pre-configured TV user associated icons by pressing a <Logon> button on the remote control. After that, the user may select the pre-configured icon or image representing him via screen navigation. The TV service personalization can commence. The user interface of the TV may present a temporary dialogue box, allowing the user to enter his (privacy security) PIN. After a few seconds the dialogue box may automatically close.
   TV user associated icons may be shown on the primary screen or on a display of the RC.
   After secure logon is (successfully) conducted, the icon associated with the TV user appears on the shared TV device screen and/or on the display of the RC indicating the current privacy level. For example, a key symbol could be displayed in an overlay manner to indicate the level of privacy.
- TV device client offered secure logon option:
   A set of icons associated with TV users can be displayed on a user interface of the TV service, if optional privacy-related TV service features are available. The user logs on, personalizes and protects the given service by activating the icon representing him. The TV service personalization commences. The user interface may (e.g., for a limited period of time) present a dialogue box that allows entering at least one character, e.g., by pressing a 1st, 2nd, 3rd and optionally 4th <digit> RC button providing the (privacy security) PIN.
   The user authentication is thus be done by entering his PIN. Advantageously, this scenario utilizes the fact that a TV service is already running, at least in the default non-privileged mode (default TV mode 303), which does not require any logon.
   After secure logon is (successfully) conducted, the icon associated with the TV user appears on the shared TV screen and/or on the display of the RC indicating the current privacy level. For example, a key symbol could be displayed in an overlay manner to indicate the level of privacy.

The RC's specific credentials used for secure logon can be configured in the TV subscriber's profile.

In addition to the quick logon 308, a privacy request 312 can be conducted initiating a transition from the personal TV mode 309 to the safe personal TV mode 311. The privacy request 312 can be triggered by the commonly available (non-trusted) RC (or any other (short range wireless remote) control device) having, e.g., a touchscreen:
- User initiated privacy request or TV device client offered privacy option:
   The user may trigger a privacy request by activating an icon that is associated with him, the personal TV may then ask for entering the privacy security PIN. For example, a dialog box may appear (for a few seconds) requesting the PIN from the user. After having entered a valid PIN, the icon associated with the particular TV user appears on the shared TV device screen and/or on the display of the RC showing the current level of privacy. For example, a key symbol could be displayed in an overlay manner to indicate the level of privacy.

- TV service initiated privacy request:
   If it is required to obtain a TV viewer's authentication in order to enter the safe personal TV mode 311, e.g., when an according request is received, the personal TV service can initiate the privacy request 312 asking the user to enter his PIN. After having entered a valid PIN, the icon associated with the particular TV user appears on the shared TV device screen and/or on the display of the RC showing the current level of privacy. For example, a key symbol could be displayed in an overlay manner to indicate the level of privacy.
- Depending on the configuration of the TV service, the privacy status may be maintained even when switching between TV services (of different privacy levels). The scope of the privacy status may be flexibly set for a given TV service context.

The RC's specific credentials used for secure logon can be configured in the TV subscriber's profile.

### Advantages of the UI logon options

Advantageously, entering the user's identification via digit buttons of the RC requires less user interaction compared to navigating to a user icon and selecting it via RC buttons.

In case TV services offer an optional personalization, the interactive user specific logon icons provide an intuitive way to request personalization, in particular as basic TV service usage is already available. Also, in case of a UI realized as a touchscreen, the interactive icons specific for each user allow for convenient quick logon and thus a secure logon mechanisms that could be efficiently used even for shared RC devices.

The quick logon, secure logon and/or privacy request can be supported with legacy RC devices, e.g., by navigating means and providing access to the various logons via a main menu of the shared TV device.

### Quick logon and secure logon via Personal TV remote control devices

In addition to shared RC devices, TV systems may support personalized and managed remote control devices (PRCs), also referred to as user identification and remote TV control devices. PRCs may be generic devices, e.g., mobile phones, personal digital assistants, mobile computers. These devices can be customized, e.g., by running an application that provides remote control capability to the TV system. In this regard, PRC can also be perceived as an application that runs on or operates the device. The PRC may be a user identifying control application being distributed to a mobile device and the shared TV server, which may provide end user face, gesture and/or voice recognition capabilities. It is noted that access to the TV system can be obtained via wired or wireless connections. Various communication interfaces can be used for, e.g., a wireless connection: mobile communication, WiFi, Bluetooth, infrared, etc.

The PRC may comprise a touchscreen, in particular input means and/or a display. The display may be capable of showing TV. The PRC may in particular provide a "Two-Screen Experience": For example a personal smart phone can be used for controlling the shared primary screen TV device.

The PRC can typically be registered to be used by a single TV viewer. In a sense, the TV viewer owns this PRC. It is noted that in case the PRC is a smart phone, the user normally enters a PIN to access the functions of the smart phone; in this regard, this PRC is already an individualized device and thus substantially different from the commonly available infrared remote control that can be used by anyone who gets hold of it.

### PRC-based quick logon, secure logon and privacy request:

TV viewer specific personalization profiles can be activated in case the PRC takes over control for a shared TV device. The PRC may convey the quick logon, secure logon and/or privacy request to a given shared TV device based on an explicit interaction of its associated TV viewer or an a-priori configured programmatic automated signaling.

The user may decide to activate the TV in the default TV mode 303, the personal TV mode 309 or the safe personal TV mode 311. Different interaction options can be provided by the PRC to support such selection.

The user ID can be automatically supplied to the TV system by the PRC. As an option, the PRC may ask the user to enter his user ID to then convey it to the TV system. The interaction and/or configuration thereof can be supported by the PRC. This is rather convenient, because the user is familiar with the user interface of the PRC and he may configure it to meet his demands. Also, as the PRC itself is within the sphere of a particular user, he may decide on the level of security: For example, the user may decide that entering an access PIN for the device (which he may be required prior to use the PRC anyway) is sufficient for all (or some) levels of safety regarding the different TV modes. Then, the user may simply activate a quick logon symbol and the PRC provides all communication and information necessary for this user to enter the personal TV mode 309.

This mechanism applies for entering the safe personal TV mode 311 accordingly. Hence, the user may configure the PRC whether the privacy PIN needs to be entered manually before launching the privacy request 312 or whether this privacy PIN is automatically conveyed by the PRC to the TV system in order to reach the safe personal TV mode 311.

The PRC may be a device with a trust module or any secure place for storing the privacy PIN. In such scenario, the privacy PIN does not have to be entered by the user (at all).

The PRC allows personalized and automated logons with the TV system with a minimum of user interaction.

Several users may access the TV system thereby providing conflicting logons, which may affect the smooth interaction between user and TV system. Hence, hereinafter, an approach to deal with conflicting access (or logons) to the TV system will be illustrated.

### Processing/Solving of conflicting logons directed to the personal TV functionality

As multiple PRCs may be available in the proximity of the shared TV device trying to concurrently conduct a quick logon, the shared TV device has to decide to which PRC access is granted.

It is noted that conflicting quick logons are just one example. Conflicts may also exist, e.g., with regard to competing secure logons and/or mixed quick logons and secure logons. One basic strategy is to entitle access to the PRC that has done the recent interactive logon. Logons that are conducted by users can be prioritized over automatically conducted machine to machine (mtm) logons.

As indicated, conflicting access (logon) to the TV system may occur thereby affecting the TV service usage experience. The members of the TV viewer group may be able to solve such conflict, because the members of the TV viewer group know each other (typically a private household may on average comprise three members of the TV viewer group).

Nevertheless usage conflict resolution may become more difficult, if TV viewers conduct logons by a remote device, e.g., via the Internet, or based on pre-configured (periodical) mtm quick logons.

TV viewers may conduct an automated quick logon via PRCs in case this does not lead to a severe conflict with TV viewers that are already logged on.

Hence, a set of logon prioritization assumptions, logon control rules and logon session attributes preventing conflicts, may be used to resolve conflicts and to optimize the overall TV session experience for the users.

### - Assumption A:

An exclusively shared TV device usage by a single TV viewer conflicting with the needs of other users is not the major shared primary screen TV usage paradigm.

For example, (infrequent) logons conducted by different users can be granted in case such logons are not explicitly prevented by interactions from other users.

### Logon Control Rule A:

In case no TV viewer is logged on, any quick logon or secure logon is accepted by the shared TV device.

### Logon Session Attribute "Locked":

During a limited time period after a successful logon, a TV viewer can interactively prevent logons from other TV viewers. Hence, this successfully logged on TV viewer is able to "lock" his TV session.

Locking a session could be a pre-configured TV viewer specific automated option after a successful logon; however, such an automated lock may result in a lower priority class.

The session attribute may be further handled as follows:
▪ The attribute "Locked" becomes disabled when the session is over (after logoff of the user).
▪ A user with a higher priority can still gain control of a locked session. This prevents locking a TV session by an Internet user or by a mtm logon; in both cases, the locking user (or machine) may not be reachable to solve the conflict otherwise.
▪ The user interface TV may indicate (e.g., via an icon shown in an overlay manner) the "Locked" attribute, e.g., by showing an icon or image of the user who has locked the TV session together with, e.g., a key symbol.

### - Assumption B:

Interactive quick logons initiated by the user may have a higher priority than quick logons initiated by a device (in an automated way).

### Logon Control Rule B:

▪ After a quick logon initiated by a user, the shared TV device disables
   - quick logons initiated by other users for a predefined first period of time, e.g., 5 seconds; this first time period can be subject to configuration.
   - quick logons initiated by a device for a predefined second period of time, which is preferably longer than the first period of time, e.g. 5 minutes; this second time period can be subject to configuration.
▪ After a quick logon initiated by a machine in an automated way, the shared TV device disables automated quick logons for a third period of time (which also be subject to configuration and in the order of the second period of time, e.g. 5 minutes). Quick logons initiated by users are still processed.

Rejections of quick logons can be indicated via the shared TV UI or via the RC UIs owned by the user trying to conduct the quick logon and the user who is already logged on.

Advantageously, a TV viewer that has successfully logged on has some time to lock his TV session.

### - Assumption C:

A quick logon conducted by a RC that is in a vicinity of the shared TV device has a higher priority than a quick logon conducted by a device of unknown distance to the shared TV device.

### Examples:

▪ Pressing a button at the set-top-box may overrule a button pressed on the RC.
▪ Pressing a button on the infrared RC may overrule an interaction with a smartphone that is connected to the shared TV device via WiFi.
▪ Pressing a button on the infrared RC in combination with face and gesture recognition provided by the shared TV server may overrule a control interaction via a smartphone that is connected to the shared TV server via Wi-Fi.
▪ An interaction with a smartphone that is connected to the shared TV device via WiFi may overrule an interaction with a smartphones that is connected via a mobile network or the Internet.

### Logon Control Rule C:

After a quick logon by a given RC device belonging to a priority class, whose priority has been derived from a shared TV screen distance related attribute, the shared TV device disables
▪ quick logons by devices of the same priority class for a first period of time, e.g., 5 seconds; this first time period can be subject to configuration.
▪ quick logons by devices of a lower priority class for a second period of time (preferably longer than the first period of time), e.g., 5 minutes; this second time period can be subject to configuration.
▪ quick logons by devices of a higher priority class can still proceed.

The temporary "logon blocking" in combination with displaying the rejections enables TV viewers, that are automatically logged on by their PRCs, to block their TV session against other viewers belonging to the same priority class.

Logon Control Rules A, B and C can be applied in combination.

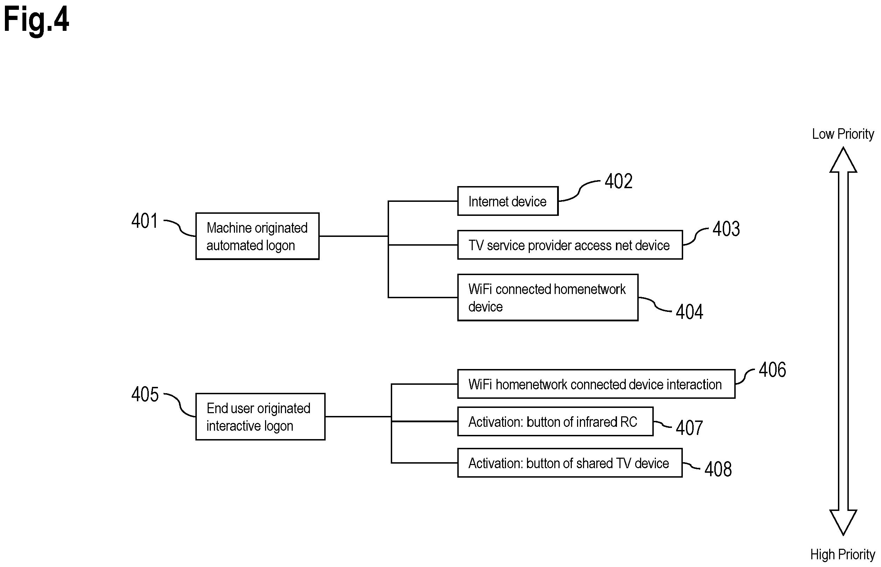

**Fig.4** shows examples of user or device-specific logon priority classes. A machine originated automated logon 401 has a lower priority class compared to a user originated interactive logon 405. Within the machine originated automated logon 401, an Internet device 402 has the lowest priority class, a TV service provider access net device 403 has a higher priority class and a WiFi connected home network device 404 has the highest priority class. Within the user originated logon 405, the WiFi interaction via a device 406 connected to the home network (and thus the shared TV device) has the lowest priority class, an activation of an infrared RC 407 has a higher priority class and activating a button of the shared TV device (e.g., a set-top box) 408 has the highest priority class.

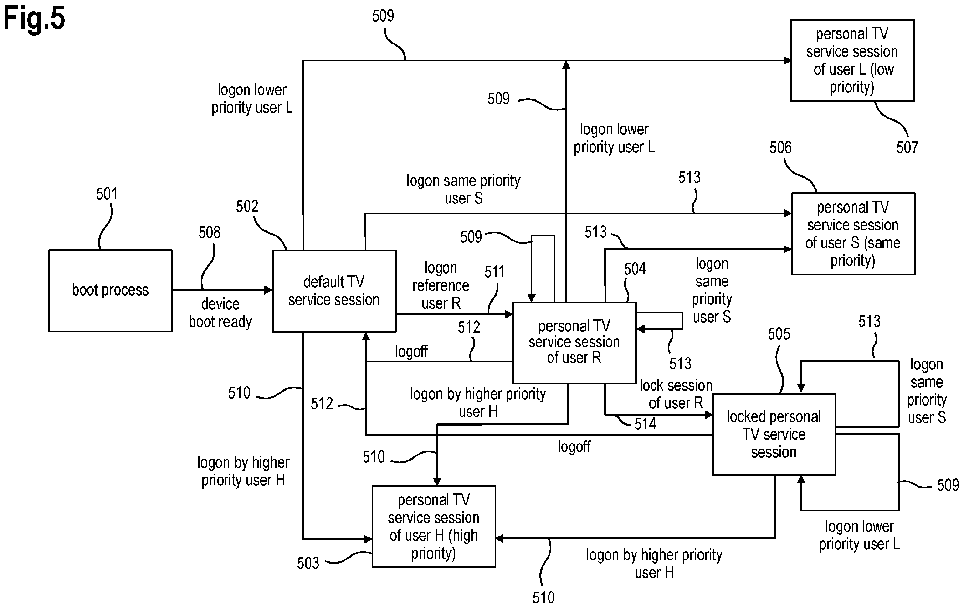

**Fig.5** shows a state diagram with transitions visualizing TV session control transfer pursuant to logons conducted by TV users associated with different priority classes.

After a TV device is started (see transition "device boot ready" 508), subsequent to a boot process 501 a default TV service session state 502 is entered.

A transition 511 indicates that a reference user R conducts a logon and the state changes from the state 502 to a state 504, wherein a personal TV service session of reference user R is active. From this state 504, the session may be locked by the reference user R (see transition 514) thereby reaching a state 505 (locked personal TV service session of user R).

A transition 512 indicates a logoff of the reference user R. Such transition 512 is feasible in the state 504 as well as in the state 505 and leads to the default TV service session state 502.

A transition 509 indicates a logon request of a user L who has a lower priority compared to the reference user R. Hence, in the state 502, the transition 509 leads to a state 507, wherein the personal TV service session is active for the low priority user L (successful logon of the low priority user L). In the state 504 with the reference user R being logged on, the transition 509 may revert to this state 504 and the reference user R remains logged on. If the timeout of the reference user's logon state is reached or immanent, the transition 509 may trigger a state change from the state 504 to the state 507. When in the state 505 however, any transition 509 may not lead to a state change, but reverts to said state 505.

The same applies for a user S of the same priority compared to the reference user R. Hence, a transition 513 indicates a logon request of the user S. As long as the reference user R is not yet logged on, this transition 513 triggers a change from the state 502 to a state 506, wherein the personal TV service session is active for the user S. In the state 504 with the reference user R being logged on, the transition 513 may revert to this state 504 and the reference user R remains logged on. If the timeout of the reference user's logon state is reached or immanent, the transition 513 may trigger a state change from the state 504 to the state 506. When in the state 505 however, any transition 513 may not lead to a state change, but reverts to said state 505.

Finally, a transition 510 indicates a logon request of a user H of higher priority compared to the reference user R. When in state 502, the transition 510 results in a state 503, wherein the personal TV service session is active for the user H. Also, based on the higher priority of user H compared to user R, the transition 510 enables a state change from the state 504 as well as from the state 505 to the state 503 thereby grabbing control for said user H.

### User management:

For example, the following roles may be regarded as users:
- TV subscriber,
- household admin,
- TV user,
- parent user,
- TV device user,
- non-privileged TV user (e.g., child),
- default TV user.

In particular, the following user TV profiles may be applicable:
- TV subscriber (generic for household members) profile,
- TV user profile comprising for each TV service
   - personal usage preferences (favorite channels, channel numbering),
   - historic usage based templates (e.g., session bookmarks, searches).

Also, the following may be regarded as user assets: TV user owned content (recordings) and user generated service assets (i.e. search templates, media usage templates, reminders).

In addition, the following may be regarded as user specific TV service usage session and/or execution context: TV service resources with usage attributes (shared, personal, hidden).

### Device management:

The following may be subject to device management:
- shared TV devices: TV device UI capabilities (e.g., logon credentials such as user ID, privacy PIN)
- remote control device classes,
- personal RC devices,
- RC device UI capabilities (e.g., logon credentials such as user ID, privacy PIN)
- shared TV "primary screen" device companion relationship with remote control devices.

### Embodiment of generic shared TV device usage conflict processing:

The approach presented may in particular handle conflicts regarding resources in various ways allowing for a user-friendly and convenient TV service experience.
1. Basically a "first come first serve" approach for TV service control granting can be applied. This provides a fair solution when serving two TV users requesting control with the same of priority.
2. When granting control a "lease for TV control" can be issued. Hence, explicit interactive resource de-allocation by TV users may become an optional feature thereby reducing the number of mandatory user interface interactions. Furthermore, it enforces the robustness of the overall signaling approach against remote control originated request communication errors. All reserved TV resources may be freed automatically, even in case the reserving remote control becomes disconnected. No central heartbeat based signaling is required.
3. The supported short-term lease for TV control (e.g., 30 seconds) enables short-term reservation and releasing of exclusive TV resources during a single TV service activity, like, e.g., a personal VoD catalog featuring personal VoD catalog priorities on the shared TV screen. This approach thus allows sharing of TV resources.
4. Often a sequence of short-term personal TV activities needs to be executed in order to achieve a personal TV service result. For example, looking up a VoD catalog in combination with checking movie recommendations followed by a purchasing dialog may be an exemplary sequence of personalized activities (the user searching for, selecting and buying a movie). The conflict resolution approach supports such use case by extending the time line of an initially granted short-term lease via a follow-up TV service request, which is issued during the duration of the initial lease. Hence, the probability to process the full sequence to buy the movie is high in case the first lease has been successfully granted.
5. The supported "media session length lease for TV control" may lock the exclusive execution of a TV service, using shared resources for the length of an intended TV media item consumption or TV service usage time.
6. As a "session lease" grant has an impact on other TV users, related resource reservation may be limited to a time window of a defined TV service session. For example, watching a VoD movie, or viewing a digital TV program item are typical examples for TV usage sessions with a duration that is well known. This approach limits the maximum time of an exclusive usage of TV resources enforced by a single TV user.
7. Supporting privacy of a TV service execution can be considered as an add-on TV session or activity property once a TV session has been successfully locked by a user or activity execution has been granted.
8. Different types of PRCs (Personal Remote Control devices, providing combined User Identification and Remote TV control capabilities) may connect with the shared TV server via different types of access networks, wireless media or UI elements (located, e.g., at the housing of the shared TV device/server). In order to support the efficient conflict resolution communication between household members, even in case of users accessing the shared TV device from a remote location (e.g., via the Internet and/or a mobile communication system), a TV service execution request that is not allowed may be indicated by a message indicating which TV resource requested is already reserved by whom and at what time this resource will become available again. This message thus enables the user whose request has been denied to launch a communication session with the owner of the currently active resource.
9. In order to support the efficient conflict resolution in case of conflicting requests by users (e.g., household members), the pre-configured prioritization of requests according to the control device type and access network type as described above is supported. In particular control devices that are close to the shared TV device, users and interactive end-users may have a higher priority class compared to users accessing the shared TV device from abroad or compared to machines automatically trying to logon.
10. In order to optionally support the needs of a hierarchically organized group (e.g., a household); a TV user management may assign a statically pre-configured priority to members of the group (e.g., household members).

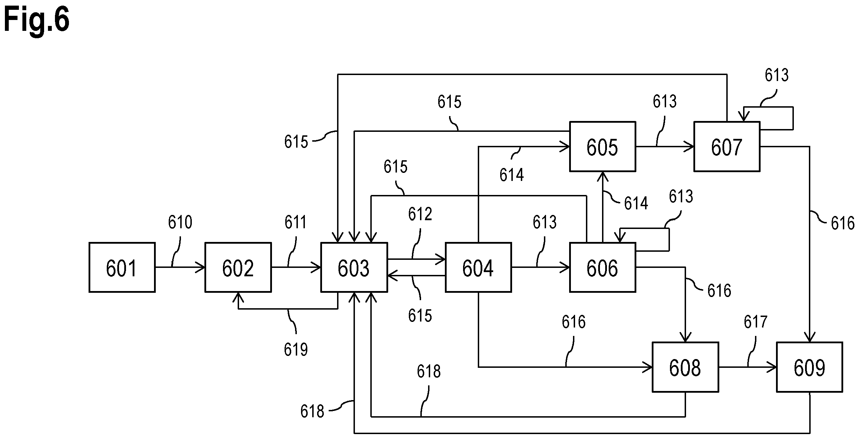

**Fig.6** shows an exemplary diagram visualizing a conflict resolution between competing allocations for a primary TV screen.

A shared TV device conducts a boot process 601. When the booting is finished, the shared device is ready (see transition 610) and enters a primary screen default TV mode 602. According to a transition 611, a user U is identified as a viewer via the user's PRC (which can be an automated task) thereby entering a state 603 indicating that the user U is identified. Hence, the PRC registers the user in an adhoc user group.

According to a transition 612, the user U inherently requests exclusive primary screen control by an interactive personal activity thereby reaching a state 604 indicating that an activity control lease has been temporarily granted to the user U.

According to a transition 613, the user U executes a sequence of personal activities within the time window of the already acquired primary screen control lease (amounting to, e.g., 30 seconds). This can be done in the state 604 thereby reaching a state 606, wherein the personal activity control lease is extended. The transition 613 is also feasible in this state 606 reaching again the very same state 606.

According to a transition 614, the user U sets the activities execution mode to "private" within the time window of the already acquired control lease. This is feasible in the state 604 thereby reaching a state 605, wherein the privacy of the user's activity is set. This is also feasible in the state 606 thereby reaching the state 605.

In the state 605, the transition 613 can be used to reach a state 607, wherein the private activity control lease is extended. Also, the transition 613 is feasible in this state 607 reaching again the very same state 607.

A transition 615 indicates that the lease for the primary screen control reaches its time limit. This transition 615 allows the state 604, 605, 606 and 607 to return to the state 603, respectively.

According to a transition 616, the user U requests exclusive personal session control within the time window of the acquired primary screen control lease (this can be achieved by an explicit request or via an inherent request). This transition 616 is feasible in the state 604 or in the state 606 thereby reaching a state 608, wherein the user U obtained exclusive control over a session (by locking said session). Also, the transition 616 is allowed in the state 607 to reach a state 609, wherein the privacy of the locked session is set.

A transition 617 enables the user U to set the session execution mode to private (this can be achieved by an explicit request or via an inherent request). Such transition 617 can be used in the state 608 to reach said state 609.

According to a transition 618, the user U releases the session (session is no longer locked). This can be done, e.g., after a media session is over, according to a logoff of the PRC or pursuant to a control request of higher priority. Such transition 618 allows the state 608 or 609 to return to the state 603.

Pursuant to a transition 619, the user U is un-registered, thereby the state 603 returns to the state 602.

### Embodiment of an "active" personal TV user identification:

Users that have recently interacted with the shared TV device are considered to be active users.

In addition, also automated user identification can be provided. Such automated user identification can be based on tracking connected PRCs, user associated unique ID emitters and/or user faces, gestures or voices. For example, a user may wear his personal device comprising such ID emitter when moving. Hence, a position of the user may be determined and/or the user can be identified.

It is an option, that automated user identification may use at least two data sources to ensure that the (correct) user and/or position is determined.

### Multi-user TV use cases:

The following outlines some TV services that may beneficially use a management of personalized TV usage:
- TV session bookmarks can be shared across devices;
- a personally filtered view to a recording archive can be provided;
- personal search templates on TV content can be reused;
- personal TV content recommendation systems can be maintained and utilized in various ways.

### Further Advantages:

The solution presented allows focusing on main personal TV use cases. It significantly reduces the amount of user interaction required and thus improves the seamless user experience with various TV services. Also, personal content services are supported in many ways including, e.g., the increasing amount of information provided by a central management entity and/or the Internet. Furthermore, private TV services, including blended media and secure communication services can be integrated without any complex login interaction.

### List of abbreviations:

- IPTV: Internet Protocol based Television
- mtm: Machine-to-Machine
- PIN: Personal Identity Number
- PRC: Personal Remote Control
- RC: Remote Control
- STB: Set-Top Box
- TV: Television
- UI: User Interface
- VoD: Video on Demand

## Claims

1. A method for conflict processing when accessing a personal TV functionality by a plurality of users, comprising the following steps:
- the personal TV functionality is activated via a control device;
- resources are determined;
- a resource conflict is determined, wherein the resource conflict is based on several users of the plurality of users trying to obtain access to their personal TV functionality at the same time by requesting the same resources;
- the resource conflict is processed according to at least one predetermined criterion
**characterized in that**
the resource conflict is processed according to the at least one predetermined criterion by issuing for the resource that is subject to the conflict a short-term lease of a predefined duration that can be extended on demand prior to its time lapse.

2. The method according to claim 1, wherein the control device is assigned to the user group or to a user of the user group.

3. The method according to any of the preceding claims, wherein the personal TV functionality is activated by an input provided via the control device and the resources are determined based on this input.

4. The method according to any of claims 1 to 2, wherein the personal TV functionality is activated in an automated way without an input provided via the control device.

5. The method according to any of the preceding claims, wherein a TV profile is determined for the user of the user group.

6. The method according to any of the preceding claims, wherein the resources comprise at least one of the following:
- a TV screen;
- a video recording resource, in particular a client video recorder resource;
- a processing capability;
- a bandwidth;
- a channel;
- rights for media delivery and/or blended content delivery;
- a TV service.

7. The method according to any of the preceding claims, wherein at least one of the following resource conflicts are determined due to different users:
- a current resource conflict;
- a potential future resource conflict.

8. The method according to any of the preceding claims, wherein the predetermined criterion for processing the conflict comprises at least one of the following:
- a priority of the user;
- a priority of the control device;
- an order and/or a sequence of previous access to the personal TV functionality;
- a source activating access to the personal TV functionality;
- a type of access to the personal TV functionality;
- a distance to a TV device, in particular a shared TV device.

9. The method according to any of the preceding claims, wherein a non-availability of the resource is indicated to at least one user of the user group.

10. The method according to any of the preceding claims, wherein the control device comprises at least one of the following devices:
- a remote control;
- a mobile device, in particular a smart phone or a computer for accessing the personal TV;
- a wireless tag, in particular an RFID tag;
- a control device comprising a face, voice, fingerprint and/or gesture recognition functionality;
- a device providing a biometrical user identification and/or gesture recognition capability;
- a device interworking with a shared TV server providing a biometrical user identification and/or a gesture recognition capability.

11. The method according to any of the preceding claims, wherein the personal TV functionality comprises at least two stages,
- a personal TV mode and
- a safe personal TV mode,
wherein a transition from the personal TV mode to the safe personal TV mode is conducted upon receiving an authorization.

12. The method according to claim 11,
- wherein the transition to the safe personal TV mode is triggered by the remote device,
- wherein the authorization is requested by presenting an input dialog,
- wherein the input dialog is closed after the authorization or after a predetermined period of time.

13. The method according to any of claims 11 or 12, wherein the personal TV mode is entered upon receiving an identification.

14. The method according to any of claims 11 to 13, wherein a status information is displayed indicating the personal TV mode and/or the safe personal TV mode in particular together with an information regarding a user that is currently in any such mode.

15. The method according to any of claims 11 to 14, wherein a transition from a default TV mode to the safe personal TV mode is conducted upon receiving an authorization.

16. The method according to any of claims 11 to 15, wherein the authorization and/or the identification is provided by the control device with or without user interaction.

17. A device for conflict processing when accessing a personal TV functionality by a plurality of users comprising or being associated with a processing unit that is arranged
- for activating the personal TV functionality via a control device;
- for determining resources;
- for determining a resource conflict, wherein the resource conflict is based on several users of the plurality of users trying to obtain access to their personal TV functionality at the same time by requesting the same resources;
- for processing the resource conflict according to at least one predetermined criterion
**characterized in that**
the resource conflict is processed according to the at least one predetermined criterion by issuing for the resource that is subject to the conflict a short-term lease of a predefined duration that can be extended on demand prior to its time lapse.

18. The device according to claim 17, wherein said device is a shared TV device, in particular a TV server or a TV set-top box.

## Patentansprüche

1. Verfahren zur Konfliktverarbeitung, wenn von einer Vielzahl von Benutzern auf eine persönliche TV-Funktionalität zugegriffen wird, das die folgenden Schritte umfasst:
- die persönliche TV-Funktionalität wird via eine Steuervorrichtung aktiviert;
- Ressourcen werden bestimmt;
- ein Ressourcenkonflikt wird bestimmt, wobei der Ressourcenkonflikt darauf basiert, dass mehrere Benutzer der Vielzahl von Benutzern versuchen, durch Anfordern derselben Ressourcen gleichzeitig Zugriff auf ihre persönliche TV-Funktionalität zu erhalten;
- der Ressourcenkonflikt wird gemäß mindestens einem vorbestimmten Kriterium verarbeitet
**dadurch gekennzeichnet, dass**
der Ressourcenkonflikt gemäß dem mindestens einen vorbestimmten Kriterium durch Ausgeben eines Kurzzeitleasing einer vordefinierten Dauer, das vor seinem Zeitablauf bei Bedarf verlängert werden kann, für die Ressource, die dem Konflikt unterliegt, verarbeitet wird.

2. Verfahren nach Anspruch 1, wobei die Steuervorrichtung der Benutzergruppe oder einem Benutzer der Benutzergruppe zugewiesen wird.

3. Verfahren nach einem der vorhergehenden Ansprüche, wobei die persönliche TV-Funktionalität durch eine Eingabe, die via die Steuervorrichtung bereitgestellt wird, aktiviert wird und die Ressourcen auf Basis dieser Eingabe bestimmt werden.

4. Verfahren nach einem der Ansprüche 1 bis 2, wobei die persönliche TV-Funktionalität auf eine automatisierte Weise ohne eine Eingabe, die via die Steuervorrichtung bereitgestellt wird, aktiviert wird.

5. Verfahren nach einem der vorhergehenden Ansprüche, wobei für den Benutzer der Benutzergruppe ein TV-Profil bestimmt wird.

6. Verfahren nach einem der vorhergehenden Ansprüche, wobei die Ressourcen mindestens eines von Folgendem umfassen:
- einen TV-Bildschirm;
- eine Videoaufzeichnungsressource, insbesondere eine Clientvideorecorderressource;
- eine Verarbeitungsfähigkeit;
- eine Bandbreite;
- einen Kanal;
- Rechte für eine Medienverteilung und/oder eine gemischte Inhaltsverteilung;
- einen TV-Dienst.

7. Verfahren nach einem der vorhergehenden Ansprüche, wobei mindestens einer der folgenden Ressourcenkonflikte aufgrund verschiedener Benutzer bestimmt wird:
- ein aktueller Ressourcenkonflikt;
- ein potenzieller zukünftiger Ressourcenkonflikt.

8. Verfahren nach einem der vorhergehenden Ansprüche, wobei das vorbestimmte Kriterium zum Verarbeiten des Konflikts mindestens eines von Folgendem umfasst:
- eine Priorität des Benutzers;
- eine Priorität der Steuervorrichtung;
- eine Reihenfolge und/oder eine Sequenz eines vorherigen Zugriffs auf die persönliche TV-Funktionalität;
- eine Quelle, die den Zugriff auf die persönliche TV-Funktionalität aktiviert;
- eine Art des Zugriffs auf die persönliche TV-Funktionalität;
- einen Abstand zu einer TV-Vorrichtung, insbesondere einer gemeinsam verwendeten TV-Vorrichtung.

9. Verfahren nach einem der vorhergehenden Ansprüche, wobei eine Nichtverfügbarkeit der Ressource mindestens einem Benutzer der Benutzergruppe angezeigt wird.

10. Verfahren nach einem der vorhergehenden Ansprüche, wobei die Steuervorrichtung mindestens eine der folgenden Vorrichtungen umfasst:
- eine Fernbedienung;
- eine mobile Vorrichtung, insbesondere ein Smartphone oder einen Computer zum Zugreifen auf das persönliche TV;
- ein drahtloses Tag, insbesondere ein RFID-Tag;
- eine Steuervorrichtung, die eine Gesichts-, Sprach-, Fingerabdruck- und/oder Gestenerkennungsfunktionalität umfasst;
- eine Vorrichtung, die eine biometrische Benutzeridentifikation und/oder Gestenerkennungsfähigkeit bereitstellt;
- eine Vorrichtung, die mit einem gemeinsam verwendeten TV-Server zusammenarbeitet, der eine biometrische Benutzeridentifikation und/oder Gestenerkennungsfähigkeit bereitstellt.

11. Verfahren nach einem der vorhergehenden Ansprüche, wobei die persönliche TV-Funktionalität mindestens zwei Stufen umfasst,
- einen persönlichen TV-Modus und
- einen sicheren persönlichen TV-Modus,
wobei der Übergang vom persönlichen TV-Modus zum sicheren persönlichen TV-Modus nach Empfangen einer Autorisierung durchgeführt wird.

12. Verfahren nach Anspruch 11,
- wobei der Übergang zum sicheren persönlichen TV-Modus von der entfernten Vorrichtung ausgelöst wird,
- wobei die Autorisierung durch Präsentieren eines Eingabedialogs angefordert wird,
- wobei der Eingabedialog nach der Autorisierung oder nach einer vorbestimmten Zeitperiode geschlossen wird.

13. Verfahren nach einem der Ansprüche 11 oder 12, wobei in den persönlichen TV-Modus nach Empfangen einer Identifikation eingetreten wird.

14. Verfahren nach einem der Ansprüche 11 bis 13, wobei Statusinformationen angezeigt werden, die den persönlichen TV-Modus und/oder den sicheren persönlichen TV-Modus anzeigen, insbesondere zusammen mit einer Information zu einem Benutzer, der sich derzeit in einem derartigen Modus befindet.

15. Verfahren nach einem der Ansprüche 11 bis 14, wobei ein Übergang von einem TV-Standardmodus zum sicheren persönlichen TV-Modus nach Empfangen einer Autorisierung durchgeführt wird.

16. Verfahren nach einem der Ansprüche 11 bis 15, wobei die Autorisierung und/oder die Identifikation von der Steuervorrichtung mit oder ohne Benutzerinteraktion bereitgestellt wird.

17. Vorrichtung zur Konfliktverarbeitung, wenn von einer Vielzahl von Benutzern auf eine persönliche TV-Funktionalität zugegriffen wird, die eine Verarbeitungseinheit umfasst oder mit einer solchen verknüpft ist, die angeordnet ist
- zum Aktivieren der persönlichen TV-Funktionalität via eine Steuervorrichtung;
- zum Bestimmen von Ressourcen;
- zum Bestimmen eines Ressourcenkonflikts, wobei der Ressourcenkonflikt darauf basiert, dass mehrere Benutzer der Vielzahl von Benutzern versuchen, durch Anfordern derselben Ressourcen gleichzeitig Zugriff auf Ihre persönliche TV-Funktionalität zu erhalten;
- zum Verarbeiten des Ressourcenkonflikts gemäß mindestens einem vorbestimmten Kriterium
**dadurch gekennzeichnet, dass**
der Ressourcenkonflikt gemäß dem mindestens einen vorbestimmten Kriterium durch Ausgeben eines Kurzzeitleasing einer vordefinierten Dauer, das vor seinem Zeitablauf bei Bedarf verlängert werden kann, für die Ressource, die dem Konflikt unterliegt, verarbeitet wird.

18. Vorrichtung nach Anspruch 17, wobei die Vorrichtung eine gemeinsam verwendete TV-Vorrichtung ist, insbesondere ein TV-Server oder eine TV-Set-Top-Box.

## Revendications

1. Procédé de traitement de conflit lors de l'accès à une fonctionnalité de télévision personnelle par une pluralité d'utilisateurs, comprenant les étapes suivantes :
- la fonctionnalité de télévision personnelle est activée au moyen d'un dispositif de commande ;
- des ressources sont déterminées ;
- un conflit de ressources est déterminé, le conflit de ressources étant basé sur une tentative par plusieurs utilisateurs de la pluralité d'utilisateurs d'obtenir l'accès à leur fonctionnalité de télévision personnelle en même temps en sollicitant les mêmes ressources ;
- le conflit de ressources est traité selon au moins un critère prédéterminé,
**caractérisé en ce que**
le conflit de ressources est traité selon l'au moins un critère prédéterminé par délivrance, pour la ressource affectée par le conflit, d'un bail à court terme d'une durée prédéterminée susceptible d'être prolongée sur demande préalablement à son expiration.

2. Procédé selon la revendication 1, dans lequel le dispositif de commande est assigné au groupe d'utilisateurs ou à un utilisateur du groupe d'utilisateurs.

3. Procédé selon l'une quelconque des revendications précédentes, dans lequel la fonctionnalité de télévision personnelle est activée par une entrée fournie au moyen du dispositif de commande et les ressources sont déterminées sur la base de cette entrée.

4. Procédé selon l'une quelconque des revendications 1 à 2, dans lequel la fonctionnalité de télévision personnelle est activée d'une manière automatisée sans qu'une entrée soit fournie au moyen du dispositif de commande.

5. Procédé selon l'une quelconque des revendications précédentes, dans lequel un profil de télévision est déterminé pour l'utilisateur du groupe d'utilisateurs.

6. Procédé selon l'une quelconque des revendications précédentes, dans lequel les ressources comprennent au moins une des ressources suivantes :
- un écran de télévision ;
- une ressource d'enregistrement vidéo, plus particulièrement une ressource de type enregistreur vidéo client ;
- une capacité de traitement ;
- une largeur de bande ;
- un canal ;
- des droits de diffusion de média et/ou de diffusion de contenu mixte ;
- un service de télévision.

7. Procédé selon l'une quelconque des revendications précédentes, dans lequel au moins un des conflits de ressources suivants est déterminé du fait d'utilisateurs différents :
- un conflit de ressources en cours ;
- un futur conflit de ressources potentiel.

8. Procédé selon l'une quelconque des revendications précédentes, dans lequel le critère prédéterminé pour le traitement du conflit comprend au moins un des critères suivants :
- une priorité de l'utilisateur ;
- une priorité du dispositif de commande ;
- un ordre et/ou une séquence d'accès précédent à la fonctionnalité de télévision personnelle ;
- une source activant l'accès à la fonctionnalité de télévision personnelle ;
- un type d'accès à la fonctionnalité de télévision personnelle ;
- une distance jusqu'à un dispositif de télévision, plus particulièrement à un dispositif de télévision partagé.

9. Procédé selon l'une quelconque des revendications précédentes, dans lequel l'indisponibilité de la ressource est indiquée à au moins un utilisateur du groupe d'utilisateurs.

10. Procédé selon l'une quelconque des revendications précédentes, dans lequel le dispositif de commande comprend au moins un des dispositifs suivants :
- une télécommande ;
- un dispositif mobile, plus particulièrement un smartphone ou un ordinateur permettant d'accéder à la télévision personnelle ;
- une étiquette sans fil, plus particulièrement une étiquette RFID ;
- un dispositif de commande comprenant une fonctionnalité de reconnaissance du visage, de la voix, d'une empreinte digitale et/ou d'un geste ;
- un dispositif offrant une capacité d'identification biométrique d'un utilisateur et/ou de reconnaissance d'un geste ;
- un dispositif en interfonctionnement avec un serveur de télévision partagé offrant une capacité d'identification biométrique d'un utilisateur et/ou de reconnaissance d'un geste.

11. Procédé selon l'une quelconque des revendications précédentes, dans lequel la fonctionnalité de télévision personnelle comprend au moins deux niveaux,
- un mode de télévision personnelle, et
- un mode de télévision personnelle sécurisé, une transition du mode de télévision personnelle vers le mode de télévision personnelle sécurisé s'effectuant lors de la réception d'une autorisation.

12. Procédé selon la revendication 11,
- dans lequel la transition vers le mode de télévision personnelle sécurisé est déclenchée par le dispositif de commande,
- dans lequel l'autorisation est sollicitée par présentation d'un dialogue d'entrée,
- dans lequel le dialogue d'entrée est refermé suite à l'autorisation ou suite à une période de temps prédéterminée.

13. Procédé selon l'une quelconque des revendications 11 ou 12, dans lequel le mode de télévision personnelle est adopté lors de la réception d'une identification.

14. Procédé selon l'une quelconque des revendications 11 à 13, dans lequel une information d'état est affichée pour indiquer le mode de télévision personnelle et/ou le mode de télévision personnelle sécurisé, plus particulièrement conjointement avec une information concernant un utilisateur qui se trouve actuellement dans l'un quelconque de ces modes.

15. Procédé selon l'une quelconque des revendications 11 à 14, dans lequel une transition d'un mode de télévision par défaut vers le mode de télévision personnelle sécurisé s'effectue lors de la réception d'une autorisation.

16. Procédé selon l'une quelconque des revendications 11 à 15, dans lequel l'autorisation et/ou l'identification sont fournies par le dispositif de commande avec ou sans interaction avec un utilisateur.

17. Dispositif de traitement de conflit lors de l'accès à une fonctionnalité de télévision personnelle par une pluralité d'utilisateurs comprenant, ou associé à, une unité de traitement conçue
- pour activer la fonctionnalité de télévision personnelle au moyen d'un dispositif de commande ;
- pour déterminer des ressources ;
- pour déterminer un conflit de ressources, le conflit de ressources étant basé sur une tentative par plusieurs utilisateurs de la pluralité d'utilisateurs d'obtenir l'accès à leur fonctionnalité de télévision personnelle en même temps en sollicitant les mêmes ressources ;
- pour traiter le conflit de ressources selon au moins un critère prédéterminé,
**caractérisé en ce que**
le conflit de ressources est traité selon l'au moins un critère prédéterminé par délivrance, pour la ressource affectée par le conflit, d'un bail à court terme d'une durée prédéterminée susceptible d'être prolongée sur demande préalablement à son expiration.

18. Dispositif selon la revendication 17, lequel dispositif est un dispositif de télévision partagé, plus particulièrement un serveur de télévision ou un boîtier décodeur de télévision.
